# EUROPÄISCHE PATENTSCHRIFT

(11) **EP 1 339 521 B1**
(45) Veröffentlichungstag und Bekanntmachung des Hinweises auf die Patenterteilung: **02.08.2006**
(21) Anmeldenummer: 01990463.0
(22) Anmeldetag: 30.11.2001
(51) Int. Cl.: B23K 20/10, H01R 43/02

(54) **VORRICHTUNG ZUM VERBINDEN VON GEGENSTÄNDEN SOWIE WERKZEUG**
METHOD FOR JOINING ARTICLES AND CORRESPONDING TOOL
DISPOSITIF POUR LE RACCORDEMENT D'OBJETS ET OUTIL CORRESPONDANT

(30) Priorität: 01.12.2000 DE 20020525 U; 08.06.2001 DE 10127824
(43) Veröffentlichungstag der Anmeldung: 03.09.2003
(73) Patentinhaber: SCHUNK Ultraschalltechnik GmbH, D-35435 Wettenberg (DE)
(72) Erfinder: STEINER, Ernst, 35452 Heuchelheim (DE); STROH, Dieter, 35435 Wettenberg (DE); DIETERLE, Horst, 35096 Niedernweimar (DE)
(74) Vertreter: Stoffregen, Hans-Herbert
(86) Internationale Anmeldenummer: PCT/EP2001/014015
(87) Internationale Veröffentlichungsnummer: WO 2002/043915

(56) Entgegenhaltungen:
- EP-A- 0 083 707
- EP-A- 0 286 975
- EP-A- 0 477 585
- DE-C- 4 128 858
- GB-A- 1 248 892
- US-A- 5 147 082

## Beschreibung

Die Erfindung bezieht sich auf eine Vorrichtung zum Verbinden wie Verschweißen von Gegenständen wie elektrischen Leitern mittels Ultraschall, insbesondere zum Verschweißen von Litzen zum Beispiel zur Herstellung von Durchgangs- oder Endknoten; umfassend einen die Gegenstände aufnehmenden oder begrenzenden Verdichtungsraum der von Arbeitsflächen von Werkzeugen in Form einer Sonotrode, eines Ambosses und/oder eines Schiebers begrenzt ist, wobei zumindest eines der Werkzeuge aus einem Tragteil und einem mit diesem verbundenen eine der Arbeitsflächen aufweisenden Arbeitsteil besteht, das Tragteil und das Arbeitsteil aus unterschiedlichen Materialien bestehen und das Arbeitsteil mit dem Tragteil durch Löten verbunden ist. Ferner nimmt die Erfindung Bezug auf ein Werkzeug in Form einer Sonotrode einer Ultraschallschweißvorrichtung, wobei das Werkzeug eine Arbeitsfläche aufweist, die während eines Schweißvorganges mit einem zu verschweißenden Gegenstand wie Litze wechselwirkt, und aus einem Tragteil und einem mit diesem verbundenen die Arbeitsfläche aufweisenden Arbeitsteil besteht und wobei das Tragteil und das Arbeitsteil aus unterschiedlichen Materialien bestehen und das Tragteil mit dem Arbeitsteil durch Löten verbunden ist.

Eine Vorrichtung zum Verschweißen von elektrischen Leitern ist zum Beispiel der EP 0 723 713 B1 zu entnehmen. Die Vorrichtung umfasst eine Ultraschallschwingungen erzeugende Sonotrode, von der ein Abschnitt eine erste seitliche als Arbeitsfläche dienende Begrenzungsfläche eines in Höhe und Breite verstellbaren im Querschnitt vorzugsweise rechteckförmigen stirnseitig offenen Verdichtungsraum ist. Die übrigen

Begrenzungs- oder Arbeitsflächen werden durch Abschnitte einer mehrteiligen Gegenelektrode gebildet, wobei die Gegenelektrode ein in etwa parallel zu dem Sonotrodenabschnitt verschiebbares, ein eine in etwa senkrecht zu dem Sonotrodenabschnitt verlaufende zweite Begrenzungsfläche aufweisendes erstes Teil als Querschieber sowie ein parallel zu der zweiten Begrenzungsfläche verschiebbares eine dritte Begrenzungsfläche bildendes zweites Teil umfasst, von dem ein eine in etwa parallel zu dem Sonotrodenabschnitt verlaufende vierte Begrenzungsfläche bildender verschiebbarer Amboss ausgeht. Dabei können die die Gegenelektrode bildenden Teile derart zwangsgekoppelt verstellbar sein, dass in einem Kompaktierschritt der Verdichtungsraum in einem fest vorgegebenen Verhältnis von Höhe und Breite veränderbar ist und nach dem Kompaktieren der Seitenschieber von dem Amboss derart entkoppelt ist, dass allein dieser in Richtung der Sonotrode verstellbar ist. Durch eine diesbezügliche Vorrichtung besteht erstmalig die Möglichkeit, querschnittsunabhängig ein definiertes Schweißen durchzuführen, und zwar auch dann, wenn in willkürlicher Reihenfolge Leiter unterschiedlicher Querschnitte nacheinander verschweißt werden.

Sowohl aus der EP 0 286 975 A2 als auch der US 4,782,990 sind Ultraschalischweißvorrichtungen bekannt, bei denen die Gegenelektrode in Form eines Ambosses um 180° umsetzbar ist, um verschiedene Arbeitsflächen, die einen Verdichtungsraum begrenzen, zur Verfugung zu stellen.

In der EP 0 083 707 A ist eine Ultraschalischweißvonichtung beschrieben, bei der einer Sonotrode ein Amboss oder zwei Ambosse zugeordnet sind, um einen oder zwei Verdichtungsräume zur Verfügung zu stellen. Dabei können sowohl die Sonotrode als auch die Ambosse um ihre jeweilige Längsachse gedreht werden, um Verdichtungsräume unterschiedlicher Querschnitte zu bilden. Um den abrasiven Verschleiß beim Verstellen des Ambosses zu der Sonotrode zu reduzieren, wird ergänzend vorgeschlagen, dass der Amboss aus gehärtetem Material besteht.

Aus der DE 37 00 257 C2 ist eine Vorrichtung zum Verbinden elektrischer Leiter mittels Ultraschall bekannt, bei der eine Sonotrode aus einem Tragteil und einem mit diesem verbundenen eine Arbeitsfläche aufweisenden Arbeitsteil besteht. Das Arbeitsteil ist in eine Bohrung des Sonotrodenkopfes einsetzbar und mittels einer Schraube gesichert. Bei einem der DE 34 07 462 A1 zu entnehmenden Ultraschallschweißwerkzeug greift ein Amboss in eine Aussparung eines Sonotrodenkopfes ein, um einen Verdichtungsraum zu begrenzen.

Um Leiter im erforderlichen Umfang mittels Ultraschall zu verschweißen, besteht nach der EP 0 286 975 A2 ein Verdichtungsraum aus vier zueinander verstellbaren Elektroden, die bereichsweise strukturiert sind.

Um einen Verdichtungsraum auf einen gewünschten Querschnitt einzustellen, ist nach der DE 41 28 858 C1 vorgesehen, dass Amboss und Sonotrode um eine gemeinsame Längsachse zueinander verdrehbar sind.

Aus der DE 33 35 254 A 1 ist eine Ultraschallschweißvorrichtung bekannt, hei der ein Verdichtungsraum von einer verstellbaren Backe begrenzt ist, um eine problemlose Anpassung an zu verschweißende Leiter unterschiedlicher Querschnitte zu ermöglichen.

Ein Handultraschallschweißgerät mit querschnittsveränderbarem Verdichtungsraum wird in der US 4,782,990 beschrieben.

Eine Vorrichtung bzw. ein Werkzeug in Form einer Sonotrode der eingangs genannten Art ist der US 5,147,082 (EP 0 375 707 B1), die als nächstliegender Stand der Technik angesehen wird und die Oberbegriffe der Ansprüche 1 und 10 offenbart, zu entnehmen. Der Sonotrodenkopf weist einen Bondkeil als Arbeitsteil mit einer Schicht aus polykristallinem Diamant als Arbeitsfläche auf. Der Bondkeil kann mit dem Sonotrodenkopf durch Löten oder durch Formschluss verbunden werden. Eine aus einer Titan-, Aluminium- und Vanadiumlegierung bestehende Sonotrodenspitze ist nach der EP 0 477 585 A2 mit CVD-Diamant oder CVDdiamantähnlichem Material versehen. Das Diamantmaterial wird auf die Sonotrodenspitze gebrazed.

Der vorliegenden Erfindung liegt das Problem zugrunde, eine Vorrichtung und ein Werkzeug der eingangs genannten Art so weiterzubilden, dass ein gezielter Materialeinsatz für die mit den zu verschweißenden Gegenständen wechselwirkenden Arbeitsflächen möglich ist, um Werkzeuge hoher Standzeiten kostengünstig herstellen zu können. Dabei soll sichergestellt sein, dass in Bezug auf eine Sonotrode als Werkzeug bei deren Schwingungserregung eine Veränderung der Wellenlänge weitgehend vennieden wird. Ferner soll durch die Materialauswahl des die Arbeitsfläche bildenden Teils der Sonotrode eine Massenoptimierung im Schwingungsbauch erfolgen, um eine Belastung der Fügezone der zu verschweißenden Gegenstände zu reduzieren. Auch soll gewährleistet sein, dass durch das Schweißen bedingtes Erwärmen zu keinen Passungenauigkeiten führt, d. h. dass zum Verstellen der Werkzeuge zueinander notwendige Spalte verbleiben.

Das Problem wird durch eine Vorrichtung der eingangs genannten Art dadurch gelöst, dass das Werkzeug eine Sonotrode ist, dass das Tragteil der Sonotrode aus Titan oder einer Titanlegerienmg und das Arbeitsteil aus Keramik in Form von Siliziumnitridkeramik, Siliziumkarbidkeramik, Zirkonoxidkerämik, Aluminiumoxidkeramik oder Dispersionskeramik, bestehen und dass das Tragteil mit dem Arbeitsteil durch Vakuumlöten mit Aktivloten verbunden ist.

Das Werkzeug in Form der Sonotrode kann mit in deren Längsrichtung sich erstreckenden zylinderartigen Basiskörper und von diesem ausgehenden die Arbeitsfläche aufweisenden Sonotrodenkopf derart ausgebildet sein, dass der Sonotrodenkopf als das Trägerteil mit zumindest zwei Arbeitstellen versehen ist. Dabei kann der Sonotrodenkopf durch zum Beispiel eine Schraubverbindung mit dem üblicherweise zylindrischen Basiskörper verbunden sein. Neben einer entsprechenden Mehrteiligkeit können Sonotrodenkopf und -körper auch eine Einheit darstellen, die an sich das Tragteil ist.

Ist das Werkzeug ein Schieber, so sollte dieser zum Zurverrugungstellen mehrerer Arbeitsflächen dreh- oder wendbar ausgebildet sein.

Als Dispersionskeramik kommt Aluminiumoxid*l*Titankarbid in Frage. Die Grundkörper der Werkzeuge wie der Schieber- oder Ambossgrundkörper können aus Titan oder Titanlegierungen wie zum Beispiel TiAl6V4, Eisenlegierungen oder Aluminium oder Aluminiumlegierung bestehen, wobei die Materialien so ausgewählt sein sollten, dass die Dichte des Arbeitsteils kleiner gleich dem 1,2-fachen der Dichte des Trägerteils ist.

Zur Herstellung des Verbundkörpers für den Schieber- oder Amboss, der aus dem Arbeitsteil und dem Tragteil besteht, kommen Löten wie insbesondere Vakuumlöten mit Aktivloten, Induktivlöten unter Schutzgas, Widerstandslöten oder Schweißen wie Reibschweißen, Laserschweißen, Ultraschallschweißen oder Widerstandsschweißen in Frage.

Ein Werkzeug der eingangs genannten Art zeichnet sich dadurch aus, dass das Werkzeug eine Sonotrode ist, dass das Tragteil der Sonotrode aus Titan oder einer Titantegierung und das Arbeitsteil aus Keramik in Form von Siliziumnitridkeramik, Siliziumkarbidkeramik, Zirkonoxidkeramik, Aluminiumoxidkeramik oder Dispersionskeramik bestehen und dass das Tragteil mit dem Arbeitsteil durch Vakuumlöten mit Aktivloten verbunden ist. Mögliche Materialien des Tragteils des Schiebers bzw. Ambosses sind Titan oder Titanlegierungen wie zum Beispiel Ti-A)6V4, Eisenlegierungen, Aluminium oder Aluminiumlegierungen.

Tragkörper und Arbeitsteil des Schiebers oder Ambosses werden insbesondere durch Löten wie Vakuumlöten mit Aktivloten. Induktivlöten unter Schutzgas oder Widerstandslöten verbunden. Alternativ kommen mögliche Schweißverbindungsarten wie Reibschweißen, Laserschweißen, Ultraschallschweißen oder Widerstandsschweißen in Frage.

Durch die erfindungsgemäße Lehre wird die Möglichkeit eröffnet, die Materialien von Tragteil und Arbeitsteil derart aufeinander abzustimmen, dass deren Massen sehr ähnlich sind, wobei gleichzeitig jedoch sichergestellt ist, dass die die Arbeitsfläche zur Verfügung stellenden Arbeitsteile eine hohe Widerstandsfähigkeit, also hohe Standzeiten aufweisen. Durch die gewählten Materialien und die Art der Verbindung insbesondere mittels Vakuumlötverfahren wird ein Verbundkörper zur Verfügung gestellt, der insbesondere in Bezug auf die Sonotrode zu einer Verschiebung von λ/2 nicht führt. Auch ist ungeachtet der hohen Abriebfestigkeit der Arbeitsfläche eine Massenveränderung nicht gegeben, so dass die Belastung in der Fügezone reduziert wird.

Um eine "Anpassung" der Ausdehnungskoeffizienten der zu verbindenden Materialien zu ermöglichen, wird vorgeschlagen, dass zwischen dem Tragteil und dem Arbeitsteil eine Zwischenlage oder -schicht angeordnet wird, die mit verlötet wird. Somit ergibt sich eine Sandwichstruktur Tragteil, Lötschicht, Zwischenschicht, Lötschicht, Arbeitsteil.

Bevorzugte Ausführungsformen und Weiterbildungen der Erfindung ergeben sich aus den Unteransprüchen.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
Fig. 1 eine Prinzipdarstellung einer Vorrichtung zum Verbinden von elektrischen Leitern,
Fig. 2 ein Detail einer weiteren Ausführungsform einer Vorrichtung zum Verbinden von elektrischen Leitern,
Fig. 3 eine Ausführungsform einer Gegenelektrode,
Fig. 4 einen Ausschnitt eines Schiebers der Vorrichtung gemäß Fig. 1 und
Fig. 5 Prinzipdarstellungen einer Sonotrode und
Fig. 6 eine weitere Prinzipdarstellung einer Sonotrode.

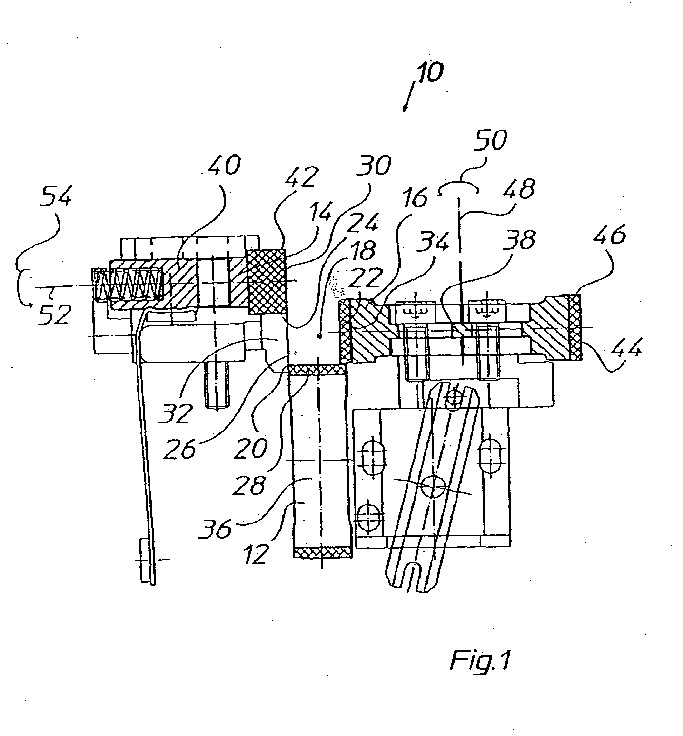

Anhand der nachstehenden Beschreibung soll die erfindungsgemäße Lehre näher erläutert werden, und zwar am Beispiel von Werkzeugen einer Ultraschallschweißvorrichtung 10, wie diese rein prinzipiell der Fig. 1 zu entnehmen ist, ohne dass hierdurch eine Beschränkung der Erfindung erfolgen soll.

Die Utraschallschweißvorrichtung 10 der Fig. 1 umfasst als wesentliche und hinreichend bekannte Elemente eine Sonotrode 12 als erstes Werkzeug oder Elektrode, einen Amboss 14 als zweites Werkzeug oder Gegenelektrode sowie einen Seitenschieber 16 als drittes Werkzeug.

Die Werkzeuge, also die Sonotrode 12, der Amboss 14 und der Schieber 16, sind derart zueinander verstellbar, dass ein Verdichtungsraum 18 ausbildbar ist, in die elektrische Leiter wie Litzen einbringbar sind, um diese zu kompaktieren bzw. zu verschweißen. Dabei wird der Verdichhmgsraum 18 von Begrenzungs- oder Arbeitsflächen 20, 22, 24, 26 begrenzt, die von Abschnitten 28, 30, 32, 34 der Sonotrode 12, des Ambosses 14 sowie des Seitenschiebers 16 gebildet werden. Insoweit wird jedoch auf eine Konstruktion verwiesen, wie diese der EP 0 723 713 B1 zu entnehmen ist, so dass auf die entsprechende Offenbarung ausdrücklich verwiesen wird;

Erfindungsgemäß ist nun vorgesehen, dass die Werkzeuge - im Ausführungsfall sämtliche Werkzeuge - als Verbundkörper ausgebildet sind, wobei sich die Werkzeuge 12, 14, 16 aus Tragteilen 36, 38, 40 und Arbeitsteilen zusammensetzen, die den Abschnitten 28, 30, 32, 34 entsprechen. Dabei sind Tragteil 36, 38, 40 und Arbeitsteil 28, 30, 32, 34 aus unterschiedlichen Materialien hergestellt, so dass eine gezielte Materialauswahl entsprechend der Beanspruchungs- bzw. Verschleißverhältnisse möglich ist. Gleichzeitig wird durch die Wahl des Materials sichergestellt, dass die beim Relatiwerschieben der Werkzeuge zueinander notwendigen Spaltmaße nicht unzulässig unterschritten werden.

Das Arbeitsteil 34 des Schiebers 14 Kann aus einem Keramikmaterial wie Siliziumnitridkeramik, Siliziumkarbidkeramik, Aluminiumoxidkeramik, Dispersionskeramiken wie zum Beispiel Aluminimnoxid/Titankarbid, polykristallinem Diamant oder Bomitrid wie CBN oder allgemein Hartmetall oder Diamantmaterial bestehen, also aus Materialien, die eine hohe Fügefestigkeit bei gleichzeitiger geringer Wärmeausdehnung zeigen. Somit ist sichergestellt, dass die beim Nacheinanderschweißen von Leitern unterschiedlicher Querschnitte auftretende starke Wärmeentwicklung, die möglicherweise nicht schnell genug abgeführt werden kann, zu unzulässigen Materialausdehnungen nicht führt.

Das Arbeitsteil 34 ist mit dem Tragteil 38 des Schiebers 16 durch insbesondere Vakuumlöten mit Aktivloten, Induktivlöten unter Schutzgas oder Widerstandslöten oder aber durch Schweißen wie Reibschweißen, Laserschweißen, Ultraschallschweißen oder Widerstandsschweißen zur Herstellung eines Verbundkörpers verbunden.

Das Arbeitsteil 28 der Sonotrode 12 besteht aus Keramik in Form von Siliziumnitridkeramik, Siliziumkarbidkeramik, Zirkonoxidkeramik, Aluminiumoxidkeramik oder Dispersionskeramik. Das Tragteil 36 der Sonotrode 12 besteht aus Titan oder einer Titanlegierung. Das Tragteil 36 ist ferner mit dem Arbeitsteil 28 durch Vakuumlöten mit Aktivloten verbunden.

In Bezug auf den Amboss 14 kann der beim Verschweißen Kräfte aufnehmende Abschnitt 30 zum Beispiel aus Werkzeugstahl bestehen. Demgegenüber kann der den Verdichtungsraum mit der Arbeitsfläche 26 seitlich begrenzende Abschnitt 32 aus einem Material bestehen wie die Arbeitsteile 28, 34 der Sonotrode 12 bzw. des Schiebers 16.

Ferner ist der Fig. 1 zu entnehmen, dass sowohl der Amboss 14 als auch der Seitenschieber 16 zwei Arbeitsflächen zur Verfügung stellen kann, nämlich neben den Arbeitsflächen 22, 24 Arbeitsflächen 42, 44, wobei letztere von einem Abschnitt 46 des Schiebers gebildet werden. Demgegenüber ist die Arbeitsfläche 42 des Ambosses 14 eine Fläche des Abschnitts oder Arbeitsteils 30 des Amboss 14, wie die Fig. 1 verdeutlicht.

Um die verschiedenen Arbeitsflächen 22, 44 bzw. 24, 42 einzusetzen, ist es nur erforderlich, dass der Schieber 16 um seine Querachse 48 um 180° gedreht wird (Pfeil 50) oder um seine Längsachse, wohingegen der Amboss 14 um seine Längsachse 52 um 180° gewendet werden kann (Pfeil 54).

Durch diese Maßnahmen erfolgt eine Mehrfachnutzung der Werkzeuge mit der Folge, dass dem Grunde nach höhere Standzeiten erreichbar sind.

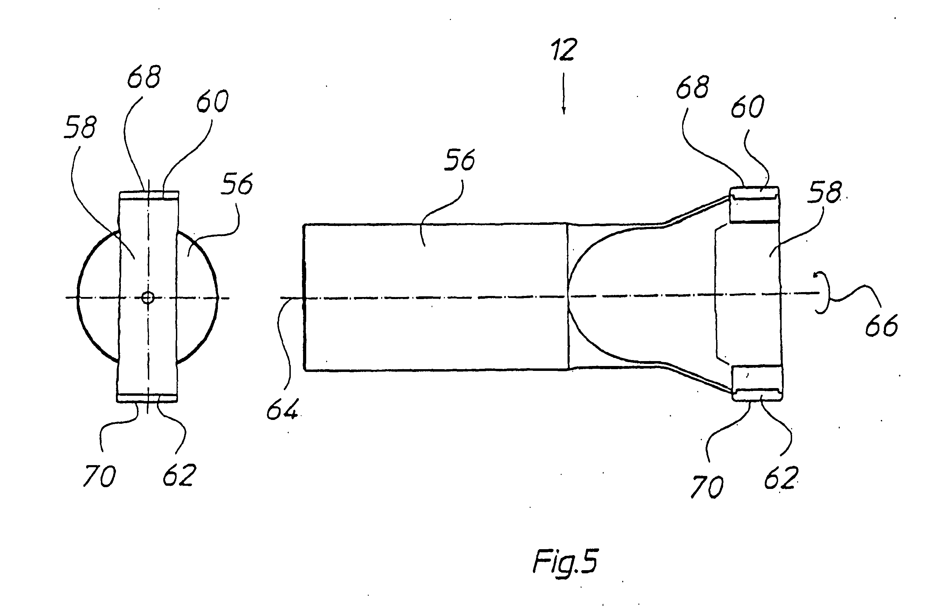

Entsprechend kann auch die Sonotrode 12. ausgebildet sein, wie anhand der Fig. 5 verdeutlicht wird. Wie der Seitenansicht im rechten Teil der Fig. 5 zu entnehmen ist, besteht die Sonotrode 12 in hinreichend bekannter Weise aus einem zylinderartigen Basiskörper 56 und einem Sonotrodenkopf 58, der umfangsseitig zum Beispiel durch Vakuumlöten befestigte Arbeitsteile 60,62 aufweist. Somit ist es nur erforderlich, dass die Sonotrode 12 um ihre Längsachse 64, in dessen Richtung die Sonotrode 12 in Schwingung versetzt wird, um einen Winkel, im Ausführungsbeispie! um 180° gedreht wird (Pfeil 66), um eine neue Arbeitsfläche 68, 70 zur Verfügung zu stellen. Dabei besteht das Arbeitsteil 60, 62 insbesondere aus Keramiken wie zum Beispiel Siliziumnitridkeramik, Siliziumkarbidkeramik, Aluminiumoxidkeramik, Dispersionskeramiken wie Aluminiumoxid/Titankarbid, polykristallinem Diamant oder Bornitrid wie CBN. Das Tragteil, das den Basiskörper 56 der Sonotrode 12 bildet, kann in bekannter Weise aus Titan oder Titanlegierungen wie zum Beispiel TiA16V4, Eisenlegierungen, Aluminium oder Aluminiumlegierungen bestehen.

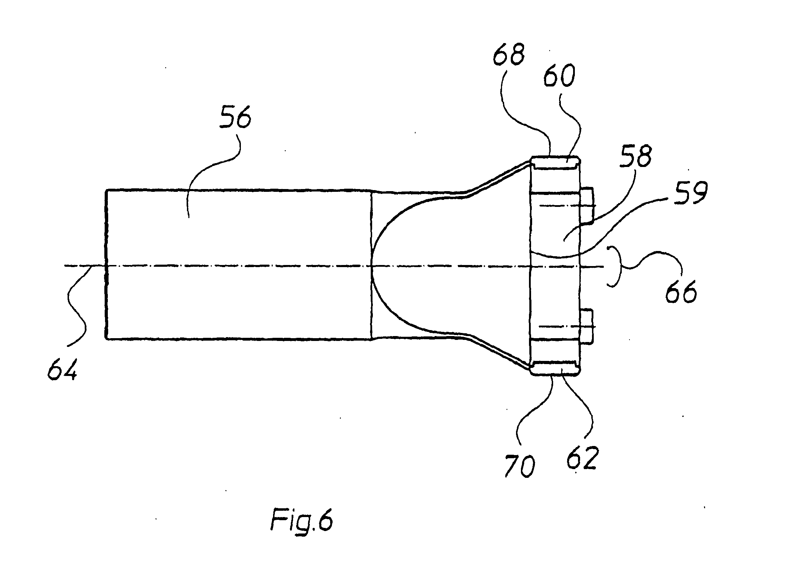

Wie durch eine in Fig. 6 eingezeichnete Schnittlinie 59 verdeutlicht werden soll, können der Sonotrodenkopf 58 und der Sonotrodenkörper 56 auch getrennte und z. B. durch Schrauben verbundene Elemente sein, so dass der Sonotrodenkopf 58 als Tragteil zu bezeichnen ist, wohingegen dies beim Ausführtingsbeispiel der Fig. 5 die Sonotrode an sich ist. Ansonsten entsprechen die Elemente der Fig. 6 denen der Fig. 5, wie auch durch die gleichen Bezugszeichen zum Ausdruck gebracht wird.

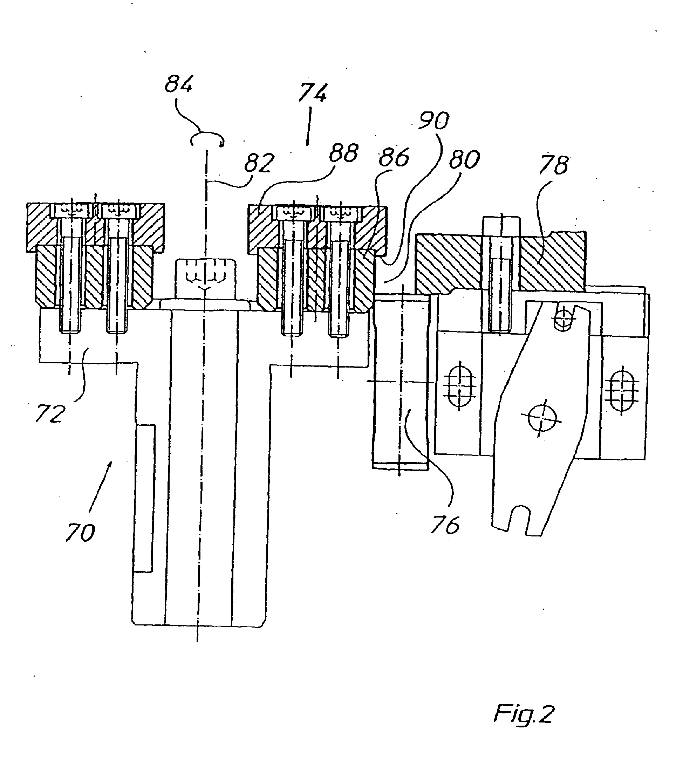

In Fig. 2 ist eine besondere Ausführungsform einer Ultraschallschweißvorrichtung mit einer Revolverhalterung 70 dargestellt, auf deren Kopf 72 zum Beispiel sechs Ambosse 74 befestigt sein können, die wahlweise einer Sonotrode 76 und einem Seitenschieber 78 entsprechend der Fig. 1 zugeordnet werden, um einen Verdichtungsraum 80 zu begrenzen. Um einen gewünschten Amboss auf den Verdichtungsraum 80 auszurichten, ist der Revolverkopf 10 um seine Längsachse 82 drehbar, wie durch den Pfeil 84 angedeutet wird.

Jeder Amboss 74 besteht dabei aus einem Tragteil 86 und einem Arbeitsteil 88, wobei das Tragteil 86 dem Abschnitt 32 des Ambosses 14 gemäß Fig. 1 entspricht. Das Tragteil 86 kann dabei aus mit polykristallinem Diamant beschichtetem Grundmaterial wie Hartmetall oder Keramik bestehen, um einerseits abrasiven Beanspruchungen ausgesetzt werden zu können und andererseits bei Temperaturerhöhungen eine Ausdehnung zu unterbinden, die anderenfalls eine unzulässige Verringening des Spaltmaßes zwischen dem Amboss 74, d.h. dem Tragteil 86 und der Sonotrode 76 bewirken könnte. Das die Kraft aufnehmende Arbeitsteil 88, das eine Begrenzungsnäche 90 für den Verdichtungsraum 18 bildet, kann zum Beispiel aus Werkzeugstahl bestehen.

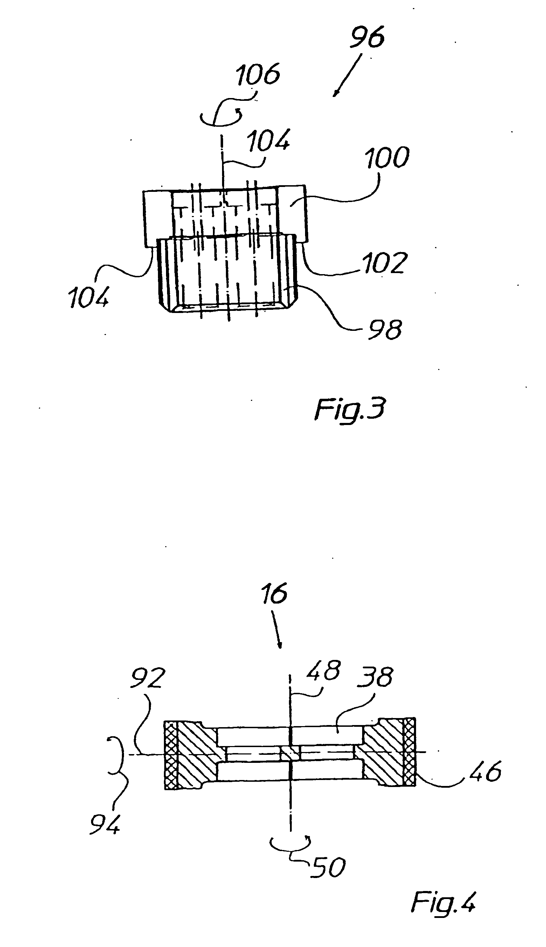

Der Schieber 16 kann eine U-förmige Geometrie aufweisen, wie diese anhand der Fig. 1 erkennbar ist, oder entsprechend der Fig. 4 eine H- oder Knochenform aufiveisen, wobei stirnseitige Abschnitte 34, 46 aus zum Beispiel mit polykristallinem Diamant beschichteten Grundmaterial wie Hartmetall oder Keramik bestehen können. Der Schieber 16, d.h. sein Tragteil 38 mit den stirnseitigen Abschnitten 34, 46 als Arbeitsteile kann dabei sowohl um seine Längsachse 92 gedreht werden (Pfeil 94) als auch um seine Mittelachse 48, wie im Zusammenhang mit der Fig. 1 erläutert worden ist.

Die Fig. 3 verdeutlicht noch einmal einen prinzipiellen Aufbau eines erfindungsgemäß ausgebildeten eine T-Form aufweisenden Ambosses 96 mit Tragteil 98 und Arbeitsteil 100, der Arbeitsflächen 102, 104 aufweist, die wahlweise einem auszubildenden Verdichtungsraum zugeordnet werden. Hierzu ist es nur erforderlich, dass der Amboss 96 um seine Mittelachse 104 um 180° und/oder je nach Verschleiß allein das Arbeitsteil 100 um die Mittelachse 104 um 180°C gedreht werden (Pfeil 106).

Der das Werkzeug bildende Amboss 96 ist um seine Mittelachse drehbar, um wahlweise eine von zwei Arbeitsflächen nutzen zu können. Demgegenüber kann das der Fig. 4 zu entnehmende Werkzeug in Form des Schiebers 16 sowohl um seine Mittelachse 48 als auch um seine Längsachse 92 gedreht bzw. gewendet werden, so dass vier Arbeitsflächen zur Begrenzung eines Verdichtungsraums zur Verfügung gestellt werden. Bei dem Werkzeug in Form der Sonotrode 12 in Fig. 5 sind zwei Arbeitsteile 60, 62 vorgesehen, die entsprechend der Ausrichtung der Sonotrode 12 Arbeits- und damit Begrenzungsflächen 68, 70 für einen zu bildenden Verdichtungsraum zur Verfügung stellen.

Des Weiteren sollten die Materialien der Elektroden, d. h. deren Arbeitsteile und Tragteile so ausgewählt sein, dass in der Fügezone, d.h. im Verbindungsbereich Arbeits- und Trägerteil eine geringe Wärmespannung auftritt. Somit sollten Trägerteil und Arbeitsteil aus Materialien bestehen, die gleiche oder ähnliche Wärmeausdehnungskoefnzienten aufweisen.

## Patentansprüche

1. Vorrichtung zum Verbinden wie Verschweißen von Gegenständen wie elektrischen Leitern mittels Ultraschall, insbesondere zum Verschweißen von Litzen zum Beispiel zur Herstellung von Durchgangs- oder Endknoten, umfassend einen die Gegenstände aufnehmenden oder begrenzenden Verdichtungsraum (18, 80), der von Arbeitsflächen (20, 22, 24, 26) von Werkzeugen (12, 14, 16, 74, 96) in Form einer Sonotrode (12), eines Ambosses (14, 96) und/oder eines Schiebers (16) begrenzt ist, wobei zumindest eines der Werkzeuge (12, 14, 16, 74, 96) aus einem Tragteil (36, 38, 40, 58, 86, 98) und einem mit diesem verbundenen eine der Arbeitsflächen (20, 22, 24, 26) aufweisenden Arbeitsteil (28, 30, 32, 34, 46, 88, 100) besteht, das Tragteil und das Arbeitsteil aus unterschiedlichen Materialien bestehen und das Arbeitsteil mit dem Tragteil durch Löten verbunden ist,
**dadurch gekennzeichnet,**
**dass** das Werkzeug eine Sonotrode (12) ist, dass das Tragteil (36) der Sonotrode aus Titan oder einer Titanlegierung und das Arbeitsteil (28) aus Keramik in Form von Siliziumnitridkeramik, Siliziumkarbidkeramik, Zirkonoxidkeramik, Aluminiumoxidkeramik oder Dispersionskeramik bestehen und dass das Tragteil mit dem Arbeitsteil durch Vakuumlöten mit Aktivloten verbunden ist.

2. Vorrichtung nach Anspruch 1,
**dadurch gekennzeichnet,**
**dass** die Sonotrode (12) aus einem in deren Längsrichtung sich erstreckenden zylinderartigen Basiskörper (56) und einem die Arbeitsfläche (20) aufweisenden Sonotrodenkopf (36, 58) besteht, dass der Sonotrodenkopf das Tragteil ist und dass das Tragteil zumindest zwei Arbeitsteile (60, 62) aufweist.

3. Vorrichtung nach Anspruch 1,
**dadurch gekennzeichnet,**
**dass** die Dispersionskeramik Aluminiumoxid/Titankarbid ist oder diese enthält.

4. Vorrichtung nach Anspruch 1,
**dadurch gekennzeichnet,**
**dass** das Tragteil (36, 28, 40, 58) aus TiA 16V4 besteht oder dieses enthält.

5. Vorrichtung nach zumindest einem der vorhergehenden Ansprüche,
**dadurch gekennzeichnet,**
**dass** zwischen dem Tragteil (36, 38, 40, 58) und dem Arbeitsteil (28, 30, 34, 60, 62) eine vorzugsweise eine Anpassung von Ausdehnungskoeffizienten ermöglichende Zwischenschicht bzw. -lage verläuft.

6. Vorrichtung nach Anspruch 1,
**dadurch gekennzeichnet,**
**dass** die Gegenelektrode der Vorrichtung mehrere Ambosse (74) umfasst, die von einer Revolver-Halterung (70) ausgehen, dass der Amboss aus einem Tragteil (86) und einem Arbeitsteil mit mehreren Arbeitsflächen (90) besteht, wobei eine gewünschte Arbeitsfläche durch Drehen des Tragteils und/oder Drehen und/oder Wenden des Arbeitsteils (60, 62) und/oder durch Drehen der Revolver-Halterung auf den Verdichtungsraum (80) ausrichtbar ist.

7. Vorrichtung nach Anspruch 6,
**dadurch gekennzeichnet,**
**dass** das Tragteil (86, 98) des Ambosses (74, 90) aus einer Eisenlegierung wie Hartmetall und/oder das Arbeitsteil (100) aus Keramik besteht.

8. Vorrichtung nach Anspruch 1,
**dadurch gekennzeichnet,**
**dass** der Schieber der Vorrichtung zur Zurverfügungstellung einer von mehreren Arbeitsflächen (22, 24) dreh- und/oder wendbar ist.

9. Vorrichtung nach zumindest Anspruch 6 oder Anspruch 8,
**dadurch gekennzeichnet,**
**dass** das Tragteil (38, 40, 58) des Ambosses (14, 96) urid/oder des Schiebers (16) mit dem Arbeitsteil (28, 32, 34, 46, 88, 100) durch Vakuumlöten mit Aktivloten verbunden ist.

10. Werkzeug (12, 14, 16, 74, 96) in Form einer Sonotrode einer Ultraschallschweißvorrichtung (10), wobei das Werkzeug eine Arbeitsfläche aufweist, die während eines Schweißvorganges mit einem zu verschweißenden Gegenstand wie Litze wechselwirkt, und aus einem Tragteil (36, 38, 40, 58, 86, 98) und einem mit diesem verbundenen die Arbeitsfläche (20, 22, 24, 34, 36) aufweisenden Arbeitsteil (28, 30, 34, 60, 62) besteht und wobei das Tragteil und das Arbeitsteil aus unterschiedlichen Materialien bestehen und das Tragteil (36, 38, 40, 58) mit dem Arbeitsteil (28, 30, 34. 60, 62) durch Löten verbunden ist,
**dadurch gekennzeichnet,**
**dass** das Tragteil (36) der Sonotrode aus Titan oder einer Titanlegierung und das Arbeitsteil (28) aus Keramik in Form von Siliziumnitridkeramik, Siliziumkarbidkeramik, Zirkonoxidkeramik, Aluminiumoxidkeramik oder Dispersionskeramik bestehen und dass das Tragteil mit dem Arbeitsteil durch Vakuumlöten mit Aktivloten verbunden ist.

11. Werkzeug nach Anspruch 10,
**dadurch gekennzeichnet,**
**dass** die Dispersionskeramik Aluminiumoxid/Titankarbid ist oder diese enthält.

12. Werkzeug nach Anspruch 10,
**dadurch gekennzeichnet,**
**dass** das Tragteil (36, 38, 40, 58) aus TiA16V4 besteht oder dieses enthält.

13. Werkzeug nach Anspruch 10,
**dadurch gekennzeichnet,**
**dass** zwischen dem Tragteil (36, 38, 40, 58) und dem Arbeitsteil (28, 30, 34, 60, 62) eine vorzugsweise eine Anpassung von Ausdehnungskoeffizienten ermöglichende Zwischenschicht bzw. -lage verläuft.

## Claims

1. Device for connection such as welding of objects such as electrical conductors using ultrasound, in particular for welding of leads, for example to make transit or terminal nodes, comprising a compression chamber (18, 80) receiving or limiting the objects and limited by working areas (20, 22, 24, 26) of tools (12, 14, 16, 74, 96) in the form of a sonotrode (12), an anvil (14, 96) and/or slide (16), where at least one of the tools (12, 14, 16, 74, 96) comprises a carrier part (36, 38, 40, 58, 86, 98) and a working part (28, 30, 32, 34, 46, 88, 100) connected thereto and having the working surfaces (20, 22, 24, 26), where the carrier part and the working parts comprise different materials, and where the working part is connected to the carrier part by soldering,
wherein,
the tool is a sonotrode (12), wherein the carrier part (36) of the sonotrode comprises titanium or a titanium alloy and the working part (28) comprises a ceramic in the form of silicon nitride ceramic, silicon carbide ceramic, zirconium oxide ceramic, aluminium oxide ceramic or dispersion ceramic, and wherein the carrier part is connected to the working part by vacuum soldering with active solders.

2. Device according to Claim 1,
wherein,
the sonotrode (12) comprises a cylindrical basic element (56) extending in its longitudinal direction and a sonotrode head (36, 58) having the working surface (20), wherein the sonotrode head is the carrier part and wherein the carrier part has at least two working parts (60, 62).

3. Device according to Claim 1,
wherein,
the dispersion ceramic is or contains aluminium oxide/titanium carbide.

4. Device according to Claim 1,
wherein,
the carrier part (36, 28, 40, 58) comprises or contains TiAl 6V4.

5. Device according to at least one of the previous claims,
wherein,
an intermediate layer preferably allowing an adjustment of coefficients of expansion runs between the carrier part (36, 38, 40, 58) and the working part (28, 30, 34, 60, 62).

6. Device according to Claim 1,
wherein,
the counter electrode of the device comprises several anvils (74) extending from a turret mounting (70), and wherein the anvil comprises a carrier part (86) and a working part with several working surfaces (90), where a required working surface can be aligned with the compression chamber (80) by rotating the carrier part and/or rotating and/or turning the working part (60, 62) and/or by rotating the turret mounting.

7. Device according to Claim 6,
wherein,
the carrier part (86, 98) of the anvil (74, 90) comprises a ferrous alloy such as carbide and/or the working part (100) comprises a ceramic.

8. Device according to Claim 1,
wherein,
the slide of the device can be rotated and/or turned to provide one of several working surfaces (22, 24).

9. Device according to at least Claim 6 or Claim 8,
wherein,
the carrier part (38, 40, 58) of the anvil (14, 96) and/or of the slide (16) is connected to the working part (28, 32, 34, 46, 88, 100) by vacuum soldering with active solders.

10. Tool (12, 14, 16, 74, 96) in the form of a sonotrode, of an ultrasonic welding device (10), where the tool has a working surface that interacts during a welding process with an object such as a lead to be welded, and comprises a carrier part (36, 38, 40, 58, 86, 98) and a working part (28, 30, 32, 34, 60, 62) connected thereto and having the working surfaces (20, 22, 24, 34, 36), and where the carrier part (36, 38, 40, 58) and the working part comprise different materials and the carrier part is connected to the working part (28, 30, 34. 60, 62) by soldering,
wherein,
the carrier part (36) of the sonotrode comprises titanium or a titanium alloy and the working part (28) comprises a ceramic in the form of silicon nitride ceramic, silicon carbide ceramic, zirconium oxide ceramic, aluminium oxide ceramic or dispersion ceramic, and wherein the carrier part is connected to the working part by vacuum soldering with active solders.

11. Tool according to Claim 10,
wherein,
the dispersion ceramic is or contains aluminium oxide/titanium carbide.

12. Tool according to Claim 10,
wherein,
the carrier part (36, 38, 40, 58) comprises or contains TiA1 6V4.

13. Tool according to Claim 10,
wherein,
an intermediate layer preferably allowing an adjustment of coefficients of expansion runs between the carrier part (36, 38, 40, 58) and the working part (28, 30, 34, 60, 62).

## Revendications

1. Dispositif pour relier, par exemple souder, des objets, tels que des conducteurs électriques, au moyen d'ultrasons, en particulier pour le soudage de fils toronnés par exemple pour la fabrication de jonctions de passage ou d'extrémité, comprenant une chambre de compression (18, 80) limitant ou contenant les objets, qui est limitée par des surfaces de travail (20, 22, 24, 26) d'outils (12, 14, 16, 74, 96) se présentant sous forme d'une sonotrode (12), d'une enclume (14, 96) et/ou d'un coulisseau (16), sachant qu'au moins un des outils (12, 14, 16, 74, 96) est composé d'une partie portante (36, 38, 40, 58, 86, 98) et d'une partie travaillante (28, 30, 32, 34, 46, 88, 100) présentant une des surfaces de travail (20, 22, 24, 26) et reliée à la partie portante, que la partie portante et la partie travaillante sont constituées de matériaux différents et que la partie travaillante est reliée à la partie portante par brasage,
**caractérisé en ce**
**que** l'outil est une sonotrode (12), que la partie portante (36) de la sonotrode est composée de titane ou d'un alliage de titane, et la partie travaillante (28) de céramique sous forme de céramique de nitrure de silicium, de céramique de carbure de silicium, de céramique d'oxyde de zirconium, de céramique d'oxyde d'aluminium ou de céramique dispersée, et que la partie portante est reliée à la partie travaillante par brasage sous vide avec brasage actif.

2. Dispositif selon la revendication 1,
**caractérisé en ce**
**que** la sonotrode (12) est constituée d'un corps de base (56) de type cylindrique s'étendant dans le sens longitudinal de la sonotrode, et d'une tête de sonotrode (36, 58) présentant la surface de travail (20), que la tête de sonotrode est la partie portante, et que la partie portante présente au moins deux parties travaillantes (60, 62).

3. Dispositif selon la revendication 1,
**caractérisé en ce**
**que** la céramique dispersée est de l'oxyde d'aluminium/du carbure de titane ou en contient.

4. Dispositif selon la revendication 1,
**caractérisé en ce**
**que** la partie portante (36, 28, 40, 58) est composée de TiA16V4 ou en contient.

5. Dispositif selon une des revendications précédentes,
**caractérisé en ce**
**qu**'une couche ou lame intermédiaire, permettant de préférence une adaptation des coefficients de dilatation, s'étend entre la partie portante (36, 38, 40, 58) et la partie travaillante (28, 30, 34, 60, 62).

6. Dispositif selon la revendication 1,
**caractérisé en ce**
**que** la contre-électrode du dispositif comprend plusieurs enclumes (74) qui partent d'un support revolver (70), que l'enclume est composée d'une partie portante (86) et d'une partie travaillante avec plusieurs surfaces de travail (90), sachant que la surface de travail souhaitée est orientable par rotation de la partie portante et/ou par rotation et/ou pivotement de la partie travaillante (60, 62) et/ou par rotation du support revolver sur la chambre de compression (80).

7. Dispositif selon la revendication 6,
**caractérisé en ce**
**que** la partie portante (86, 98) de l'enclume (74, 90) est constituée d'un alliage de fer tel que du métal dur, et/ou que la partie travaillante (100) est constituée de céramique.

8. Dispositif selon la revendication 1,
**caractérisé en ce**
**que** le coulisseau du dispositif peut être pivoté et/ou retourné pour la mise à disposition d'une des surfaces de travail (22, 24).

9. Dispositif selon au moins la revendication 6 ou la revendication 8,
**caractérisé en ce**
**que** la partie portante (38, 40, 58) de l'enclume (14, 96) et/ou du coulisseau (16) est reliée à la partie travaillante (28, 32, 34, 46, 88, 100) par brasage sous vide avec brasage actif.

10. Outil (12, 14, 16, 74, 96) sous forme de sonotrode d'un dispositif de soudage à ultrasons (10), sachant que l'outil présente une surface de travail qui agit en interaction avec un objet à souder, tel qu'un fil toronné, pendant le processus de soudage, et est composé d'une partie portante (36, 38, 40, 58, 86, 98) et d'une partie travaillante (28, 30, 34, 60, 62) présentant la surface de travail (20, 22, 24, 34, 36) et reliée à la partie travaillante, et sachant que la partie portante et la partie travaillante sont composées de matériaux différents et que la partie portante (36, 38, 40, 58) est reliée à la partie travaillante (28, 30, 34, 60, 62) par brasage,
**caractérisé en ce**
**que** la partie portante (36) de la sonotrode est composée de titane ou d'un alliage de titane, et la partie travaillante (28) de céramique sous forme de céramique de nitrure de silicium, de céramique de carbure de silicium, de céramique d'oxyde de zirconium, de céramique d'oxyde d'aluminium ou de céramique dispersée, et que la partie portante est reliée à la partie travaillante par brasage sous vide avec brasage actif.

11. Dispositif selon la revendication 10,
**caractérisé en ce**
**que** la céramique dispersée est de l'oxyde d'aluminium/du carbure de titane ou en contient.

12. Dispositif selon la revendication 10,
**caractérisé en ce**
**que** la partie portante (36, 38, 40, 58) est composée de TiA16V4 ou en contient.

13. Dispositif selon la revendication 10,
**caractérisé en ce**
**qu'**une couche ou lame intermédiaire, permettant de préférence une adaptation des coefficients de dilatation, s'étend entre la partie portante (36, 38, 40, 58) et la partie travaillante (28, 30, 34, 60, 62).
